# EUROPEAN PATENT APPLICATION

(11) **EP 4 398 143 A1**
(43) Date of publication of application: **10.07.2024**
(21) Application number: 23305005.3
(22) Date of filing: 03.01.2023
(51) Int. Cl.: G06F 40/247, G06F 16/33, G06F 16/36, G06F 40/51, G06F 40/58

(54) **TRANSLATING A NATURAL LANGUAGE PROCESSING SYSTEM GIVEN IN A SOURCE LANGUAGE INTO AT LEAST ONE TARGET LANGUAGE**

(71) Applicant: Dassault Systèmes, 78140 Vélizy-Villacoublay (FR)
(72) Inventor: CHAUMARTIN, Mr. Francois-Regis, 75008 Paris (FR)
(74) Representative: Bandpay & Greuter

(57) **Abstract**

The disclosure notably relates to a computer-implemented method for translating a Natural Language Processing (NLP) system given in a source language into at least one target language. The NLP system is based on a lexicalized taxonomy and allows text annotation and classification. The method comprises providing a corpus in the source language. The taxonomy includes annotations allowing determination of the most frequent terms describing a given concept in the corpus. The method further comprises filtering the most frequent terms for each annotation. The method further comprises querying the corpus with the most frequent terms and extracting portions of sentences comprising these terms. The method further comprises tagging the terms in each extracted portion. The method further comprises translating the extracted portions in the at least one target language using a quality machine-translator, thereby obtaining a tagged translation for each portion. The method further comprises normalizing the translations.

## Description

### TECHNICAL FIELD

The disclosure relates to the field of computer programs and systems, and more specifically to methods, systems and programs for translating a Natural Language Processing (NLP) system given a source language into at least one target language.

### BACKGROUND

A strategy intelligence software must allow to anticipate risks and to quickly detect possible threats (such as competitor's innovation, legislation evolution) or opportunities (commercial or technological). In the world of industrial companies, there are thousands of subjects to cover. Text Intelligence Studio (formerly Proxem Studio) is a semantic analysis software that allows one to define concepts and annotate texts where these concepts appear, while managing the subtleties of linguistic problems (homonymy and ambiguity, synonymy, etc.). The process consists of identifying these concepts, then expressing, in a given language, the linguistic rules that allow them to be annotated in text in that language; this phase is carried out by a Data Linguist profile and can be time-consuming.

Dassault Systèmes has used Text Intelligence Studio to define and identify in text thousands of concepts (industries, industry segments, products, types of innovations, companies, people in their roles) as well as relationships between these concepts (appointments, mergers and acquisitions, investments). This work was initially done in English.

In a globalized world, valuable information is often missing from the English-speaking publication field. Small companies often publish their press releases in their own language. Interesting scientific or economic articles are published daily in the Russian press on gas or defense, in the Chinese media on semiconductors or artificial intelligence, or in German on industrial innovations, to name a few. These documents remain outside the scope of business intelligence tools that only "understand" English. Overcoming these barriers requires (i) finding relevant information sources in different languages and (ii) being able to recognize the concepts searched for in said languages, to intelligently filter the documents, and finally (iii) translating the corresponding documents into the reader's language.

Within this context, there is still a need for improved solutions for cross-language querying of a corpus of documents.

### SUMMARY

It is therefore provided a computer-implemented method for translating a Natural Language Processing (NLP) system given in a source language into at least one target language. The NLP system is based on a lexicalized taxonomy and allows text annotation and classification. The method comprises providing a corpus in the source language. The taxonomy includes annotations allowing determination of the most frequent terms describing a given concept in the corpus. The method further comprises filtering the most frequent terms for each annotation. The method further comprises querying the corpus with the most frequent terms and extracting portions of sentences comprising these terms. The method further comprises tagging the terms in each extracted portion. The method further comprises translating the extracted portions in the at least one target language using a quality machine-translator, thereby obtaining a tagged translation for each portion. The method further comprises normalizing the translations. The method may be referred to as the "translation method".

The translation method may comprise one or more of the following:
- the method further comprises applying heuristics using statistics to ensure that the normalized tagged translations are correct;
- the method further comprises using the translated terms to crawl a new corpus of the web in the at least one target language;
- the method further comprises using the results of the web search to ensure that the translation of the terms is correct;
- each portion comprises a predetermined number of words before the term and a predetermined number of words after the terms;
- the predetermined number of words before the term and/or the predetermined number of terms after the term is larger than or equal to 3, for example larger than or equal to 4 or 5;
- the quality machine-translator is a machine-translator based on a Deep Neural Network and able to, when a term is tagged in a sentence of the source language to be translated, tag the translated term in the translated sentence in the at least one target language;
- the most frequent terms are the terms of which cumulated frequencies are greater than 90% and are below 10 terms;
- the at least one target language comprise at least one target language having a morphology; and/or
- normalizing the translations in the at least one target language having a morphology comprises transforming all inflected forms of terms to their stems.

It is further provided a computer-implemented method of use of the translation method. The method of use comprises providing a cross-language semantic search engine. The method of use further comprises translating at least one lexicalized taxonomy of the search engine given in a source language into at least one target language by applying the translation method. The method of use may be referred to as "the cross-language search engine maintenance method".

It is further provided a computer program comprising instructions for performing the translation method and/or the search engine maintenance method.

It is further provided a computer readable storage medium having recorded thereon the computer program.

It is further provided a computer system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the translation method;
- FIG.s 2 to 32 illustrate the translation method; and
- FIG. 33 shows an example of the computer system.

### DETAILED DESCRIPTION

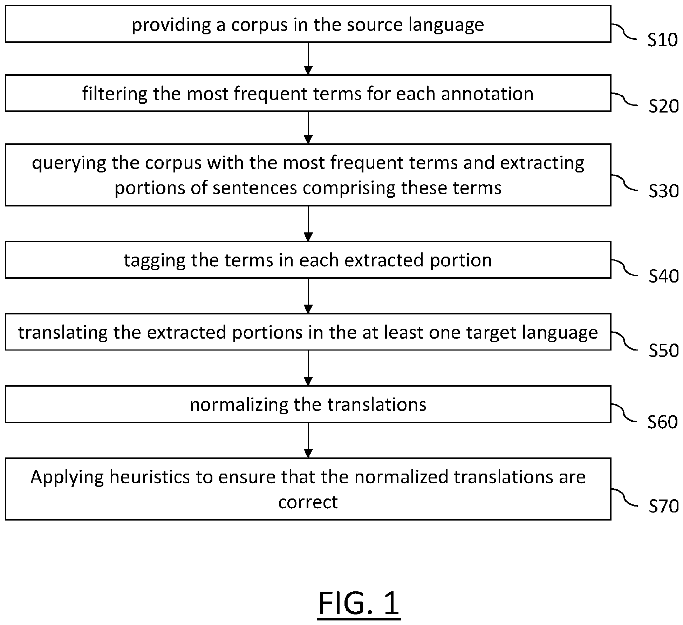

With reference to the flowchart of FIG. 1, it is proposed a computer-implemented method for translating a Natural Language Processing (NLP) system given in a source language into at least one target language. The NLP system is based on a lexicalized taxonomy and allows text annotation and classification. The method comprises providing S10 a corpus in the source language. The taxonomy includes annotations allowing determination of the most frequent terms describing a given concept in the corpus. The method further comprises filtering S20 the most frequent terms for each annotation. The method further comprises querying S30 the corpus with the most frequent terms and extracting S30 portions of sentences comprising these terms. The method further comprises tagging S40 the terms in each extracted portion. The method further comprises translating S50 the extracted portions in the at least one target language using a quality machine-translator, thereby obtaining a tagged translation for each portion. The method further comprises normalizing S60 the translations. The method may be referred to as the "translation method".

This constitutes an improved solution for cross-language querying of a corpus of documents.

Notably, the method, for a given Natural Language Processing (NLP) system given in a source language and that is based on a taxonomy in this source language, allows to translate this taxonomy in one or more target languages, the taxonomy being there usable to query corpus documents in this/these target languages. The method thus allows to extend the scope of corpus crawling that the NLP system may initially provide (that is, in the source language, such as English) into a wider scope of corpus documents in the one or more target languages (e.g. one or more of French, German, Portuguese, Spanish, Italian, Dutch, Russian, Chinese and Japanese). Furthermore, not only does the method allow this cross-language corpus crawling, but the method allows it in a completely automated manner, and notably avoids manual creation of semantic resources.

For that, the method comprises providing S10 a corpus in the source language, where for each given concept of a set of concepts of the corpus, the taxonomy features extraction and annotation rules that allow extraction and annotation of the most frequent terms in the corpus that correspond to the given concept. The method then filters S20 the most frequent terms for each concept annotation, and queries S30 the corpus of the NLP system with these terms. This results in the extraction S30 of portions of sentences (i.e. of corpus documents) that include these most frequent terms. The method then translates S50 these portions, but prior to that, comprises tagging S40 the terms (i.e. those that result from S30). Tagging S40 the terms allow the quality machine-translator to isolate the tagged terms in their respective extracted sentences portions so as to translate precisely this term (and the rest of the portion) in the at least one target language, and so as to avoid translating a tagged terms wrongly by grouping it with one or more other terms of the extracted portion. Translating the portions and not the terms only provides context to the translation, so that the translation is of quality. Altogether, S40 and S50 provide a quality and accurate translation of the terms, which can thus be then used to query a corpus in the at least one target language. The method further comprises normalizing S60 the translations, for example by transforming all inflected forms of translated terms to their stems. This allows to filter the possible gender or plural marks of the translated terms in a target language that may comprise gender and/or plural marks.

The method thus provides a translation of the taxonomy, initially in the source language, in one or more target languages, in a completely automated way. The method thus allows to create extraction rules allowing to identify each concept in texts written in the target languages. This allows (i) finding relevant information sources in different languages and (ii) being able to recognize the concepts searched for in said languages, to intelligently filter the documents, and finally (iii) translating the corresponding documents into the reader's language. The source language may be one of the following ten languages: French, German, Portuguese, Spanish, Italian, Dutch, Russian, Chinese, Japanese, and English, for example English. The at least one target language may consist in one or more target languages, each being different to one another and different from the source language, each being one of French, German, Portuguese, Spanish, Italian, Dutch, Russian, Chinese, Japanese, and English. The method thereby handles ten languages with a high quality translation level, but without the time-consuming side inherent to the manual creation of semantic resources. The method thus allows to analyze the corpus using the taxonomy generalized to several languages. A user can then make a query at a conceptual level and obtain as results relevant documents in all the languages considered. The use of machine translation software allows the translation of the texts written in the target languages of these results into the user's native language.

The method may be used for a search engine for parts (via an industrial parts taxonomy like e-class) in parts manufacturers' catalogs, rather than news. The method may also be used to update a cross-language semantic search engine that comprises a lexicalized taxonomy given in a source language. The method may be applied to translate this taxonomy into one or more lexicalized taxonomy each in a given target language. To update the cross-language semantic search engine, it suffices to update the taxonomy in the source language, and the method then automatically translates the updated taxonomy into the updated one or more lexicalized taxonomy each in a given target language. This allows an update of the taxonomy of the search engine which is fast and efficient, as there is no need for manual updates of each language that the search engine features: updating the source language suffices. This improves the maintenance of the cross-language semantic search engine.

It is in fact also provided a computer-implemented method of use of the translation method. The method of use comprises providing a cross-language semantic search engine. The method of use further comprises translating at least one lexicalized taxonomy of the search engine given in a source language into at least one target language by applying the translation method. As for the translation method, the source language may be one of the following ten languages: French, German, Portuguese, Spanish, Italian, Dutch, Russian, Chinese, Japanese, and English, for example English. The at least one target language may consist in one or more target languages, each being different to one another and different from the source language, each being one of French, German, Portuguese, Spanish, Italian, Dutch, Russian, Chinese, Japanese, and English. The method of use may be referred to as "the cross-language search engine maintenance method". The method of use may further comprise updating the lexicalized taxonomy given in the source language, for example prior to its translation into the at least one target language. This allows to update only the taxonomy in the source language, and then the translation of the taxonomy into the target language(s) updates as well the taxonomy in this/these other language(s). This enables an automated, fast and resource-efficient update of the cross-language semantic search engine. The steps of the method of use may be iterated one or more times.

The translation method is now further discussed.

The translation method is for translating a Natural Language Processing (NLP) system given in a source language into at least one target language. This means that the NLP system is available at least in the source language, and the method makes it available/usable in the at least one target language. The source language may be any one of French, German, Portuguese, Spanish, Italian, Dutch, Russian, Chinese, Japanese, and English. The source language may for example be English. The at least one target language may comprise one or more of the following languages: French, German, Portuguese, Spanish, Italian, Dutch, Russian, Chinese, Japanese, and English. The at least one target language is different from the source language, and does not comprise it. The at least one target language may comprise at least one target language having a morphology (including gender and/or number marks).

The NLP system may be any NLP system (i.e. that is based on a lexicalized taxonomy and that allows text annotation and classification). NLP stands for "Natural Language Processing". For example, the NLP system may be a search engine, such as a cross-language semantic search engine. The NLP system is based on a lexicalized taxonomy. This means that the NLP system is configured to process words domains in the source language (e.g. aeronautics industry, artificial intelligence), and comprises, for each domain, a lexicalized taxonomy of the domain, the taxonomy being lexicalized in the source language. The lexicalized taxonomy is a semantic parameterization of the domain (for example the aeronautics industry) in the source language (for example English),and consists of two complementary parts:
- A language-independent taxonomy describing (in tree or graph form) a hierarchy of concepts specific to the domain, such as list of innovations, technologies, companies, events.
- A lexicalization of this taxonomy, specific to the source language, in the form of extraction rules allowing to find in the corpus the words corresponding, in this language, to searched concepts.

The following example illustrates the concept of lexicalized taxonomy. The concept/domain in the example is #technology:ArtificialIntelligence (here prefixed by a pound sign to show that it is a concept rather than a word). The concept is associated with two extraction rules in English:
- text:AI to recognize the acronym "Al" in uppercase (the text field imposes a comparison with identical case):
- [artificial intelligence]^1 to recognize the terms *"artificial"* and *"intelligence",*
   ∘ in this order (using the left and right bracket operators),
   ∘ with possibly an intercalated word (using the ^1 operator): this allows to detect *"artificial intelligence"* but also *"artificial general intelligence", "artificial super intelligence"* or *"artificial travel intelligence".*

These rules may take into account the ambiguities of the language: for example, *"apple"* is ambiguous in English (apple fruit or company) but not in French. These rules may be defined in intention and allow extracting the set of corresponding terms, with their frequency of appearance in this corpus, in extension from the texts. The rules of the lexicalized taxonomy enable text annotation and classification. That is, the corpus may be queried using the extraction rules, and for each extraction rules, the extracted terms (i.e. words or groups of words) are annotated in the corpus's elements and classified (i.e. the same terms are regrouped in a single classification).

The method comprises providing S10 a corpus in the source language. The corpus is a set of text documents in the source language. The taxonomy includes annotations allowing determination of the most frequent terms describing a given concept in the corpus. This lexicalized taxonomy makes it indeed possible to annotate words and groups of words, corresponding to the concepts to be identified in the target language, in the corpus of documents in this language (for example news in English about the aeronautics industry). This transforms large quantities of text into data, allowing correlations to be calculated (for example, which companies are interested in which technologies).

The taxonomy allows annotation of the corpus as previously explained, and the method may comprise, for example after step S10 and before step S20, performing such annotation for any given concept (e.g. and the method may be repeated for several concepts, for example every concept in the taxonomy), for each annotation. The method may as well comprise performing the classification of the annotated terms for each annotation. This classification allows determining the most frequent terms describing a given concept in the corpus. The method may comprise performing this determination for each annotation, for example by computing the frequency of each term found by the extraction rule corresponding to the annotation. By "most frequent terms", it is meant the terms which altogether form a majority of what is extracted by the extraction rules corresponding to the given concept. The concepts may in examples be organized with hierarchical levels, where general concepts include sub-concepts (which are concepts), which may themselves include sub-concepts (which are also concepts), and so on.

Providing S10 the corpus may be performed automatically by the computer system that performs the method. Providing S10 the corpus means that the corpus is made available to the computer system, so that the computer system may use it for performing the method. This may comprise accessing (for example downloading or extracting) the corpus from the NLP system which may comprise the corpus and/or from any other data source (e.g. a server, the web, a memory, a distant memory, a database, and/or a distant database). Although the system performs the providing S10, the user may initially trigger this providing, for example by launching execution of the method.

The method further comprises filtering S20 the most frequent terms for each annotation. This may comprise selecting the terms which are the most frequent according to the 80-20 rule. In other words, the method may select the 20% classification groups that represent 80% of the annotated terms. For example, the most frequent terms may be the terms of which cumulated frequencies are larger than 90% with the constraints that the terms are below 10 terms. This means that the method may comprise performing the following:
- given a list of concepts from the taxonomy of a domain (lexicalized taxonomy in the source language), and for each concept, applying (e.g. after S10 and before S20, or as part of S10) the extraction rules in the source language on the corpus in this language, the application of these rules yielding the extraction of the terms corresponding to the concept in the corpus written in the source language;
- sorting (e.g. after S10 and before S20, or as part of S10 or of S20) by decreasing frequency the extracted terms;
- performing the filtering S20 by selecting the most frequent terms, above a certain threshold (for example 90% of cumulative frequency as previously discussed).

The filtering S20 may be performed automatically by the system, for example according to a predefined term selection rule (e.g. the 80-20 rule). The predefined rule may be defined beforehand, for example as an initial stage of the method, and for example by a user, for example by selecting the rule within a predetermined list of rules.

The method further comprises querying S30 the corpus with the most frequent terms and extracting portions of sentences comprising these terms. This means performing a respective query for each term within the most frequent terms, said respective query returning one or more documents of the corpus comprising the term, and extracting portions of the sentences (in these one or more documents) that comprise the term. The number of extracted portions may be kept equal to or lower than a predefined threshold, such as 5 extracts, which means that only a number of portions below or equal to the threshold are extracted at S30. The extraction may be performed using an extraction rule, such as extracting sentences portions that correspond to (are formed by), in addition to the term, a predetermined number of words before the term and a predetermined number of words after the terms. Thereby, each extracted portion comprises a predetermined number of words before the term and a predetermined number of words after the terms. The predetermined number of words before the term may be larger than or equal to 3, for example larger than or equal to 4 or 5, and/or the predetermined number of words after the term may be larger than or equal to 3, for example larger than or equal to 4 or 5. The predetermined number of words before the term may be equal to the predetermined number after the term. The querying and extracting S30 may be performed automatically by the computer system.

The querying and extracting S30 may comprise performing the following:
- for each of the selected terms (i.e. each term resulting from the filtering S20), searching the corpus in the original language for text extracts (i.e. sentences portions extracts) where the term appears. The number of extracts may be kept equal to or under a predefined threshold, such as 5 extracts, which means that only a number of portions below or equal to the threshold are extracted at S30; and
- cutting each of these extracts to keep only a reduced context of number of words on the left and on the right of the selected term (for example threshold of 4 words on the left and 4 words on the right, as previously discussed). This threshold allows to minimize the use of the translation software (computing power).

The method further comprises tagging S40 the terms in each extracted portion, *i.e.* for each extracted portion, tagging the annotated term that results from the filtering and that belongs to the extracted portion. Tagging the terms may be performed automatically by the computer system performing the method. Tagging a term consists in adding a tag before and/or after the term. Tagging S40 the terms may be performed automatically by the computer system. Tagging a term may comprise in examples adding a <b> tag on the left of the term and </b> tag on the right. Tagging the selected term makes it easy to find its translation in the translated text, in the target language. For example, translating "...the Food, Beverage, and <b> CPG</b> industries, among others ..." produces "... les industries de l'alimentation, des boissons et des <b>produits de grande consommation</b>, entre autres ...".

The method further comprises translating S50 (e.g. automatically by the computer system) the extracted portions in the at least one target language using a quality machine-translator. Thereby, the method obtains a tagged translation for each portion. By "quality machine-translator", it is meant in examples a translator obtained by using machine-learning. The quality machine-translator may for example be a machine-translator based on a Deep Neural Network and may be able to, when a term is tagged in a sentence of the source language to be translated, tag the translated term in the translated sentence in the at least one target language. The machine translator is thus able to process a text where a term (*i.e.* a single word or a group of continuous words) is tagged (e.g. surrounded by tags) by transferring these tags into the translation. The quality machine-translator allows to obtain a quality lexicalization of the taxonomy into the at least one target language. The machine-learning translator may be for example DeepL or the Microsoft Translator.

Translating the portions instead of just the terms themselves allows to account for the context around the terms, which allows to avoid or at least reduce translation mistakes related to ambiguities. Translating the words that define the concepts of a taxonomy, without taking into account their context, creates indeed a risk of translation mistakes. For example, "apple" is ambiguous in English (fruit or company) but not in French. One needs to know, in a taxonomy lexicalized in English, if apple refers to the fruit or the company. Using a corpus from the domain provides examples of sentences with context that removes ambiguities. For example, "Consumer products goods" in English is unambiguous and is correctly translated as « biens de consommation » or « produits de grande consommation » in French. On the other hand, translating its acronym "CPG", without context, gives « CPG » in French, which is incorrect; adding context helps the translator find a correct translation: for example, "... the Food, Beverage, and CPG industries, among others ..." is correctly translated in French as «... les secteurs de I'alimentation, des boissons et des produits de grande consommation, entre autres ...».

The method further comprises normalizing S60 the translations (i.e. those that result from the translating S50). S60 may as well be performed automatically by the system. Normalizing the translations may consist in transforming words of the translated portions into their stems (also referred to as "roots" or "base forms"). For example, the at least one target language may comprise at least one target language having a morphology (e.g. a language having roots, marks for gender and/or plural, prefixes and/or suffixes), and in this case normalizing the translations in the at least one target language may comprise transforming all inflected forms of terms to their stems.

The method may further comprise applying S70 heuristics using statistics to ensure that the normalized tagged translations are correct.

S70 may comprise, for each translated tagged term, applying statistics to determine the most frequent translations, and retaining these most frequent translations. Statistics can be applied as several extracted portions are translated. Indeed, a term in the source language can be translated in different ways in the target language, depending on the context. These different translations are generally synonyms or alternative formulations (for example, "consumer products goods" in English will be translated in French as "biens de consommation" or "produits de grande consommation"). Translating several extracts provides several translations of the selected term; this allows statistics to be made and the most frequent translations to be retained, reducing the risk of having a bad translation. S70 may further comprise applying one or both of the following heuristics to evaluate the translation quality of each selected terms:
- obtaining the same term by re-translating the translation into the original language (this may be referred to as "back translation"). "same term" is to be understood here with respect to morphology (gender and number agreement can typically vary in European languages). The method may comprise using a Levenshtein distance (giving a measure of the difference between two strings of characters) compare the two terms (the original term and its back translation); and/or
- In the case where the method yields several translated terms t1 and t2, not retaining the term t1, with t1 (for example "glace" in French) contained in another term t2 constituted by a multi-word expression (for example "glace à la vanille" in French), as the term t1 may often be too general, potentially ambiguous (in French, "glace" in the sense of "miroir" and not only "crème glacée").

When a back translation meets the dual criteria of being high in frequency and absent from the terms produced by the extraction rules, it may be a synonym that that has not been thought of when constructing the lexicalized taxonomy in the source language. The method may then propose the back translation as a new relevant term to add. If the term is valid, it improves the coverage of the taxonomy.

The method may further comprise (e.g. as part of S70 of after S70) using the translated terms (i.e. the terms resulting from S20 once translated at S50 and normalized at S60) to crawl a new corpus of the web in the at least one target language. This allows to build a corpus of web documents in the at least one target language, and for example to add it to the corpus of the NLP system or to add it as a new corpus of the NLP system. The method may further comprise the extraction of possible RSS feeds from these documents, when they exist, which allows to create a regular flow of documents coming from these websites. The method may further comprise using the results of the web search to ensure that the translation of the terms is correct. This may be part of S70 or may be performed after or before S70 to check the translation.

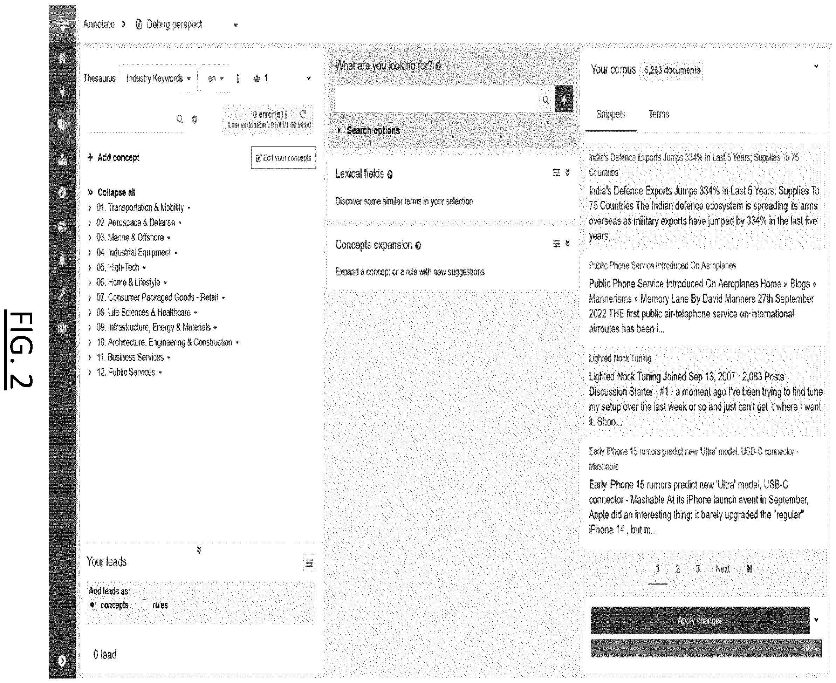

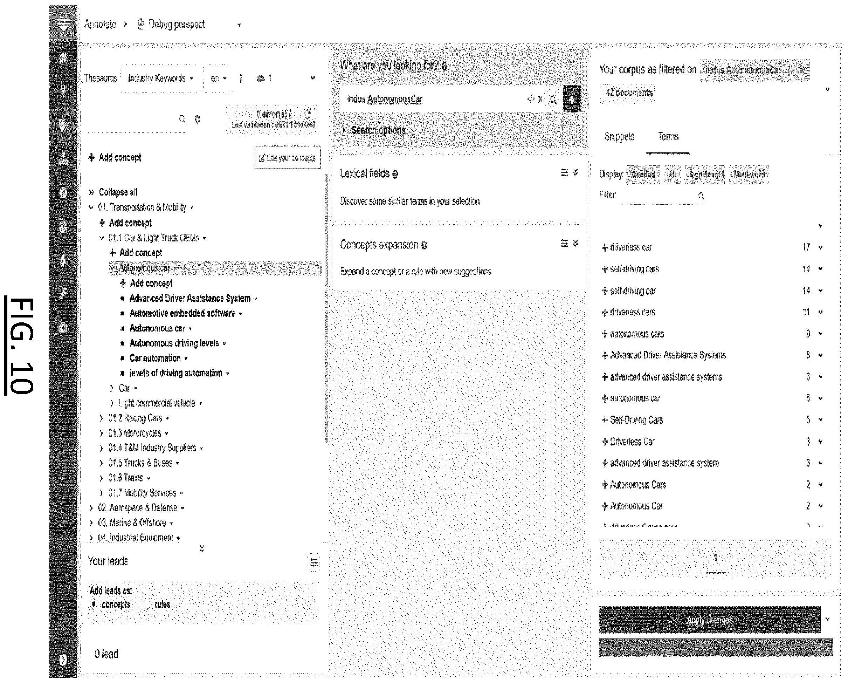

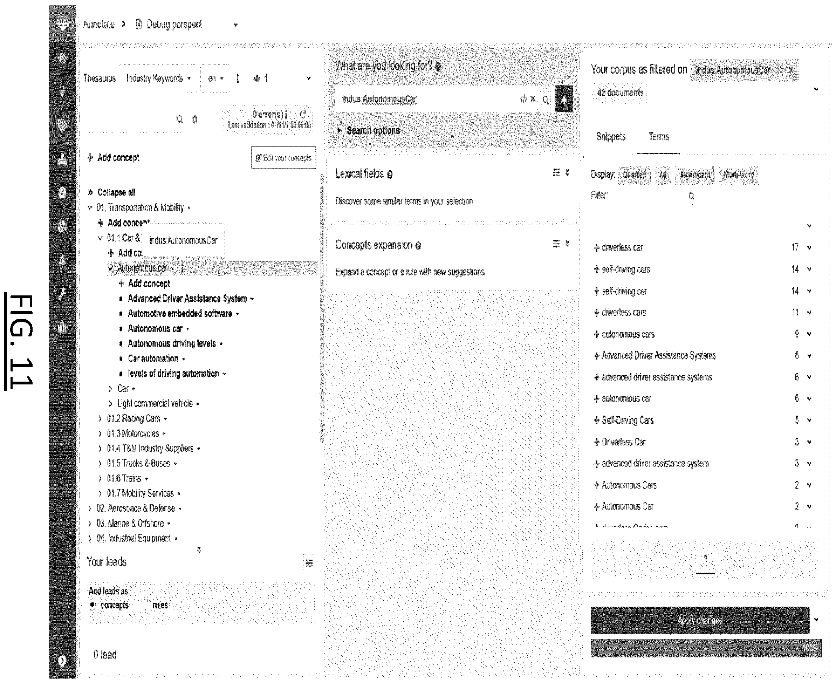

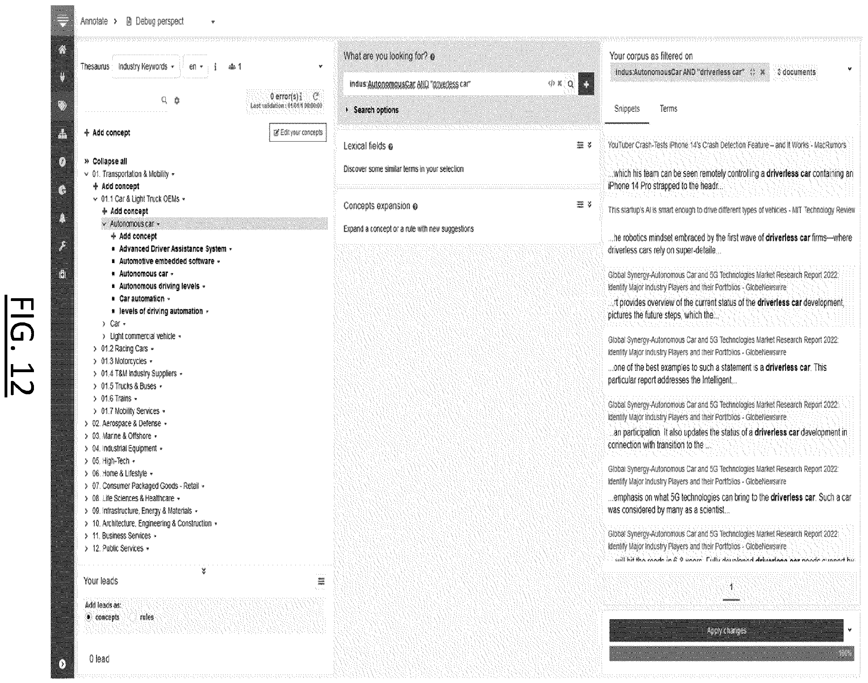

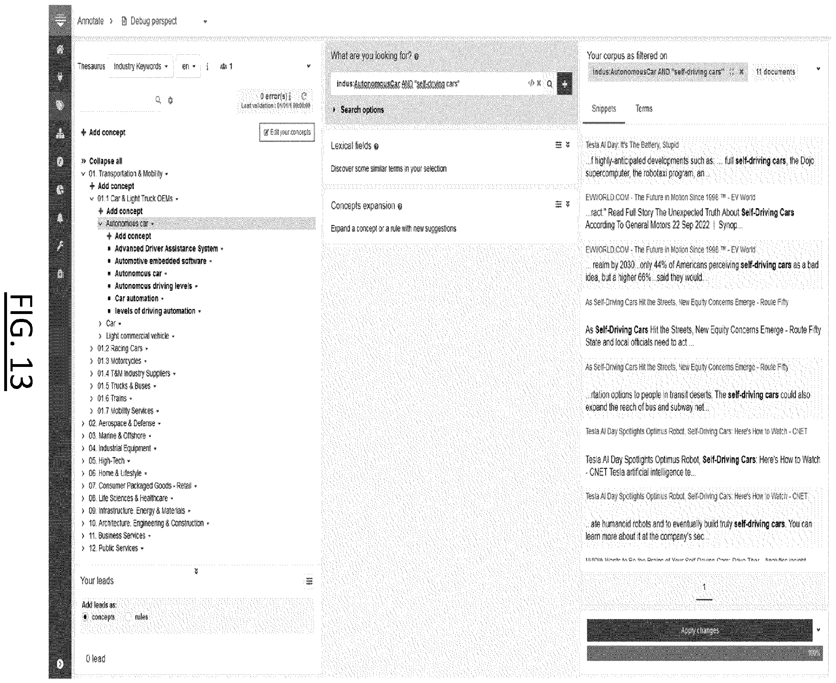

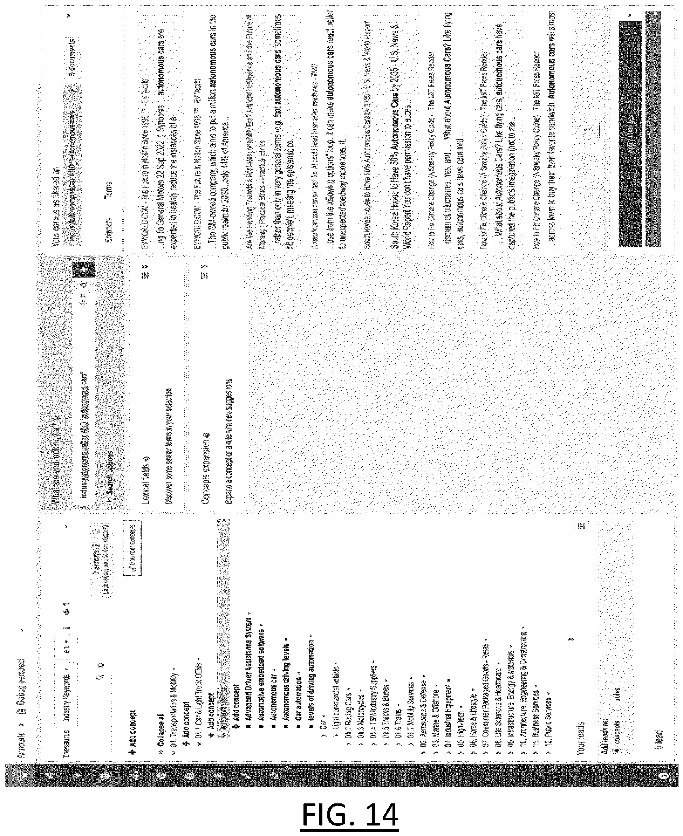

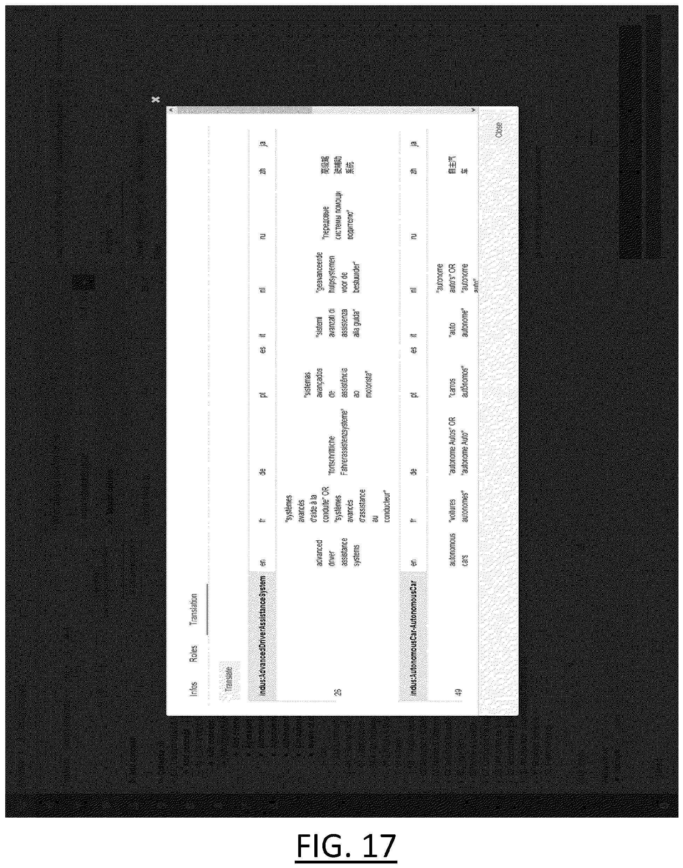

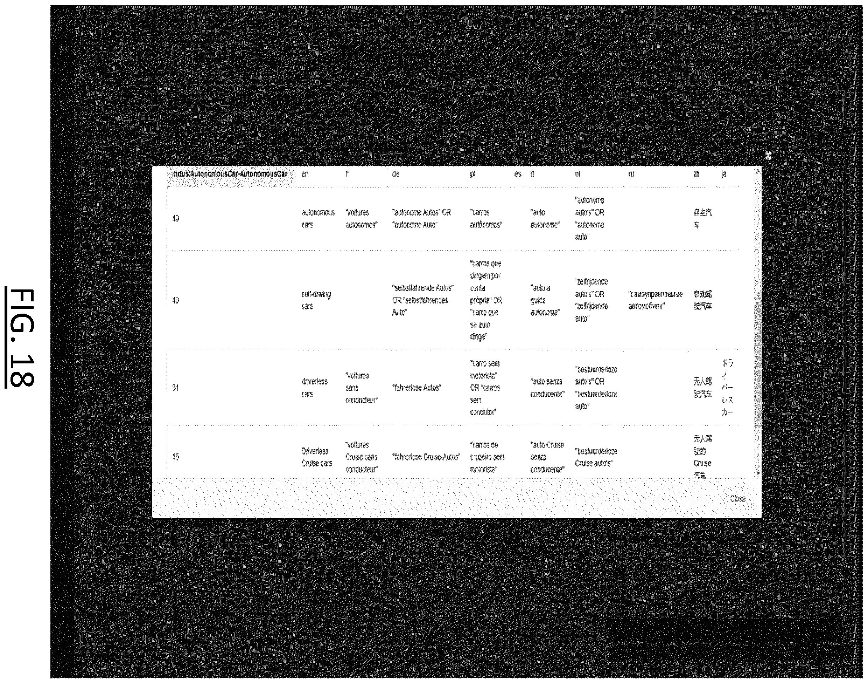

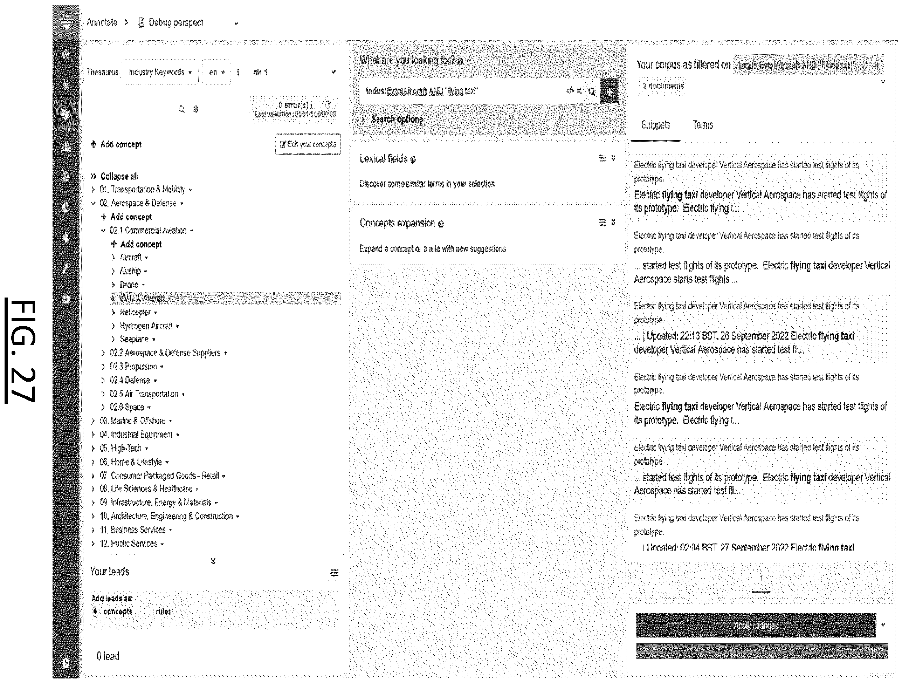

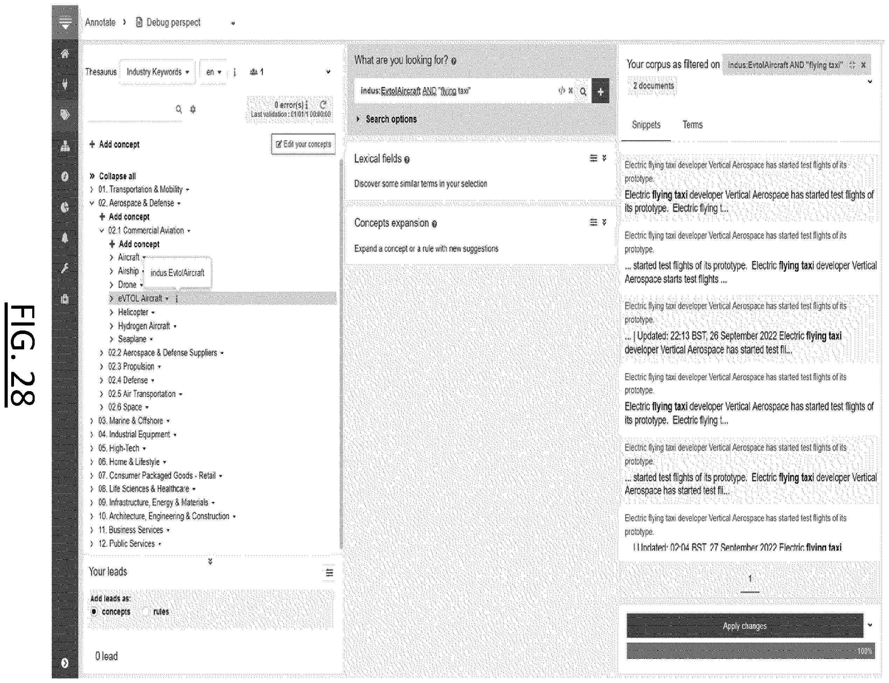

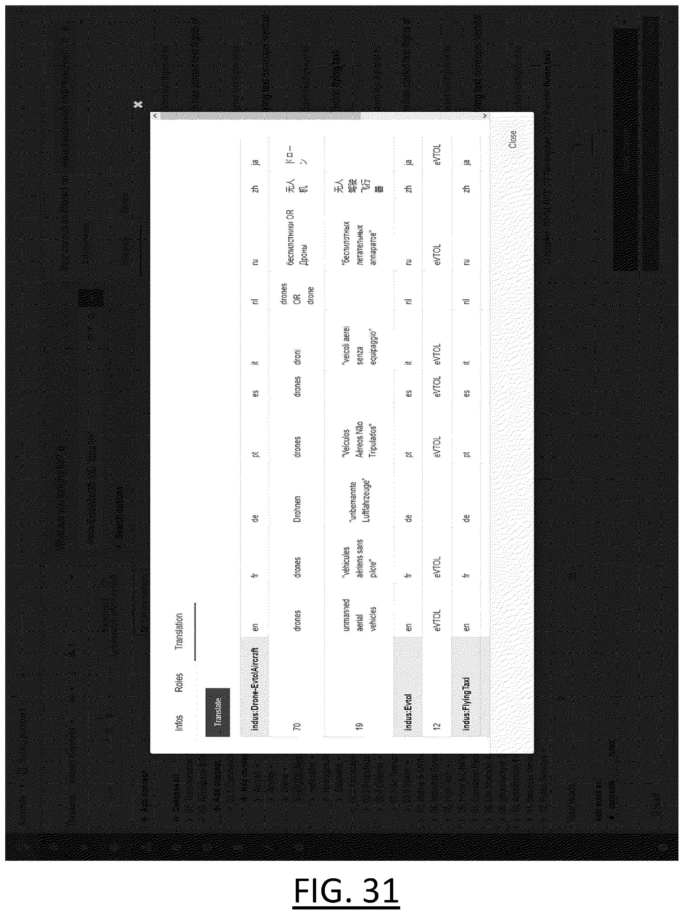

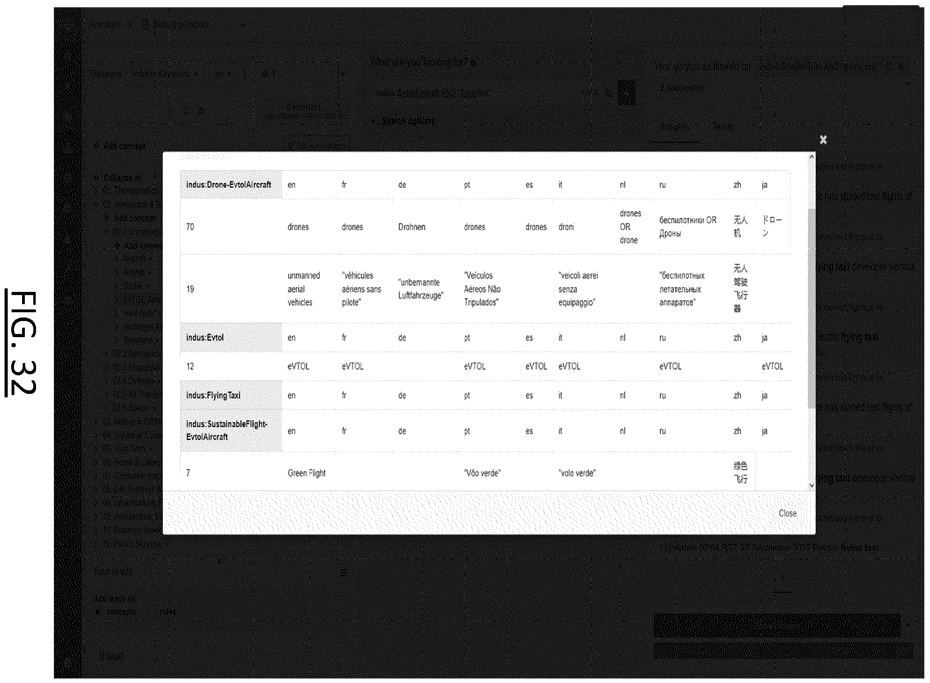

Examples of the translation method are now discussed with reference to FIG.s 2 to 32. FIG. 2 to 32 are screenshots of a graphical user interface of a software implementing an example of the translation method, and illustrate the translation method with several given concepts. In these examples, the source language is English.

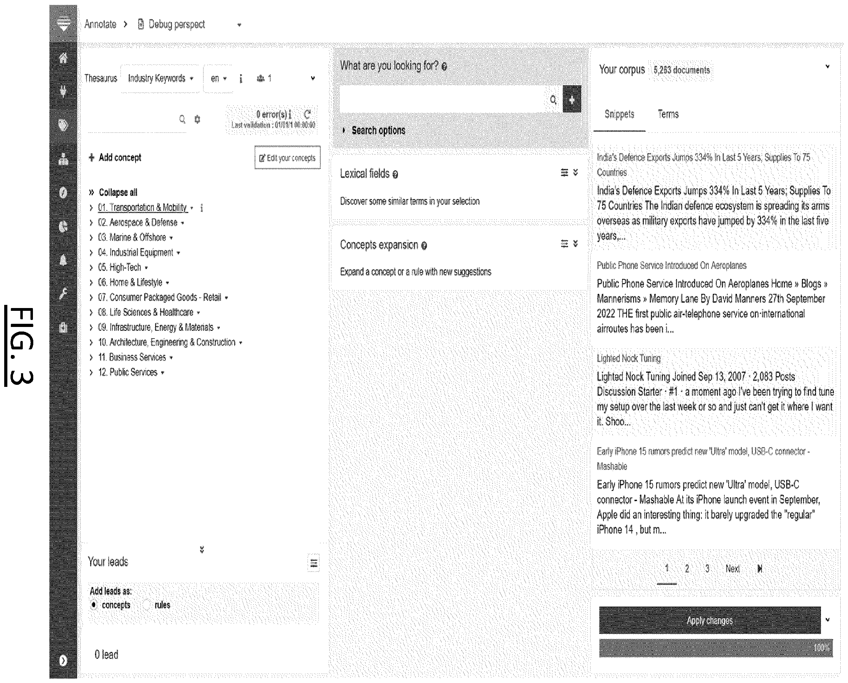

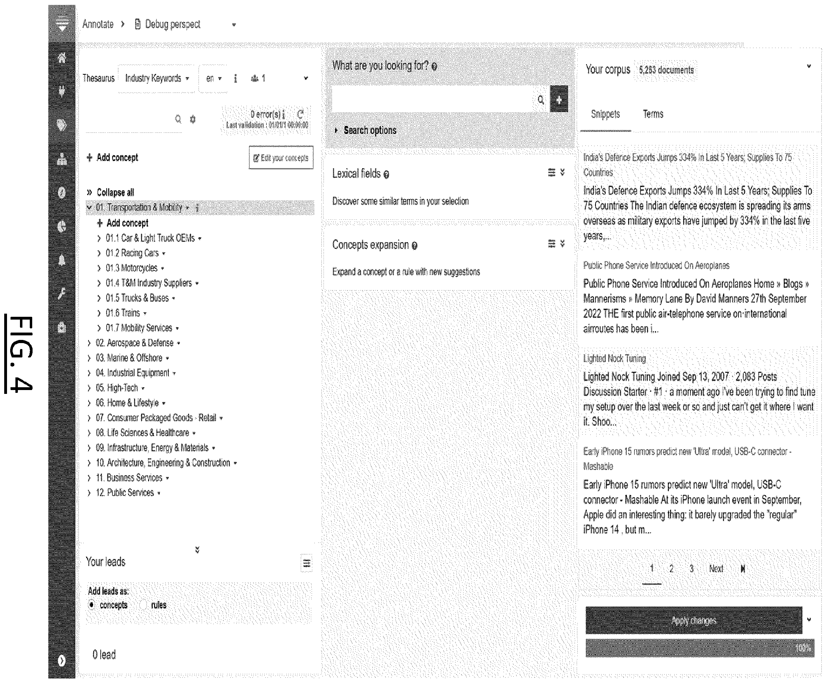

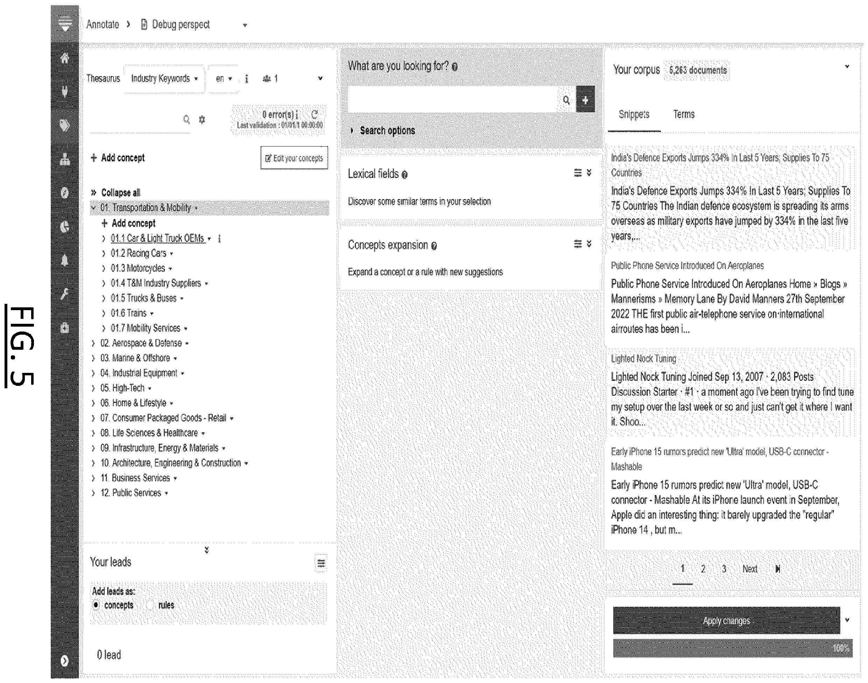

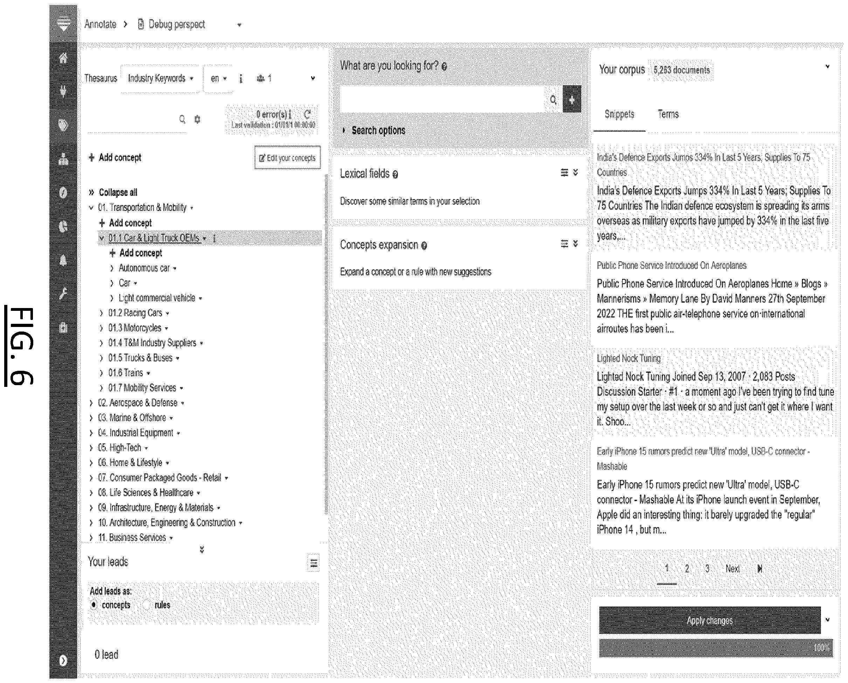

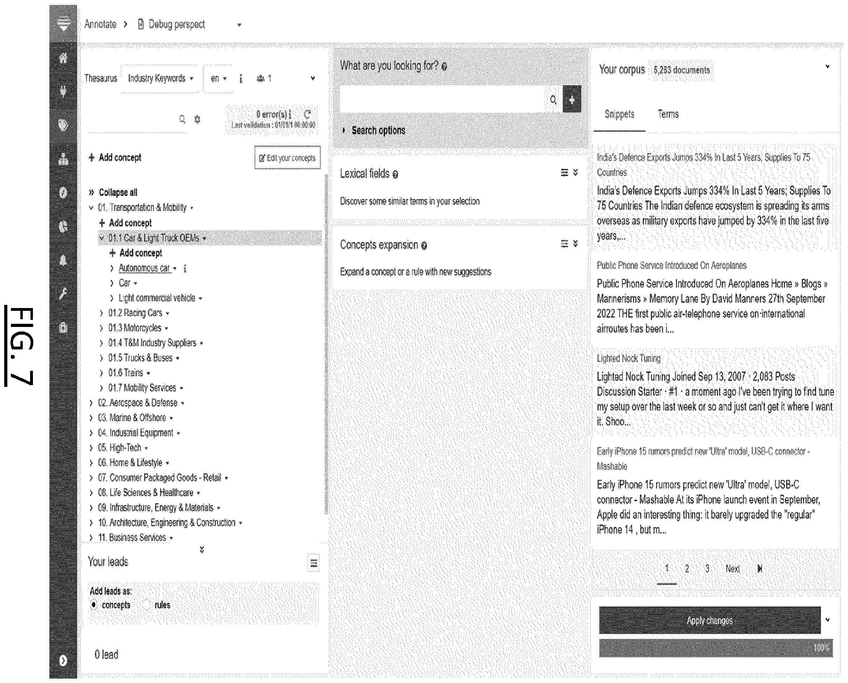

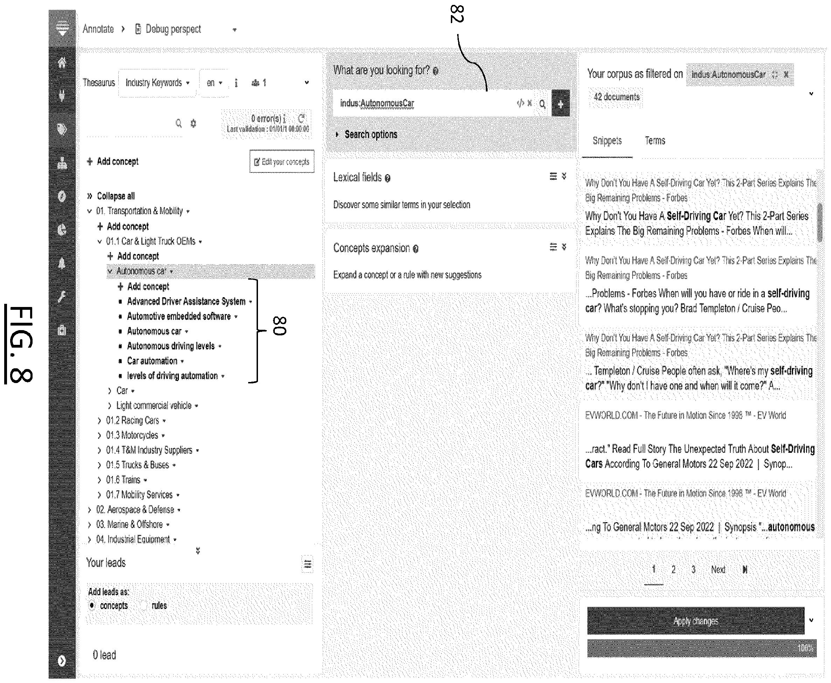

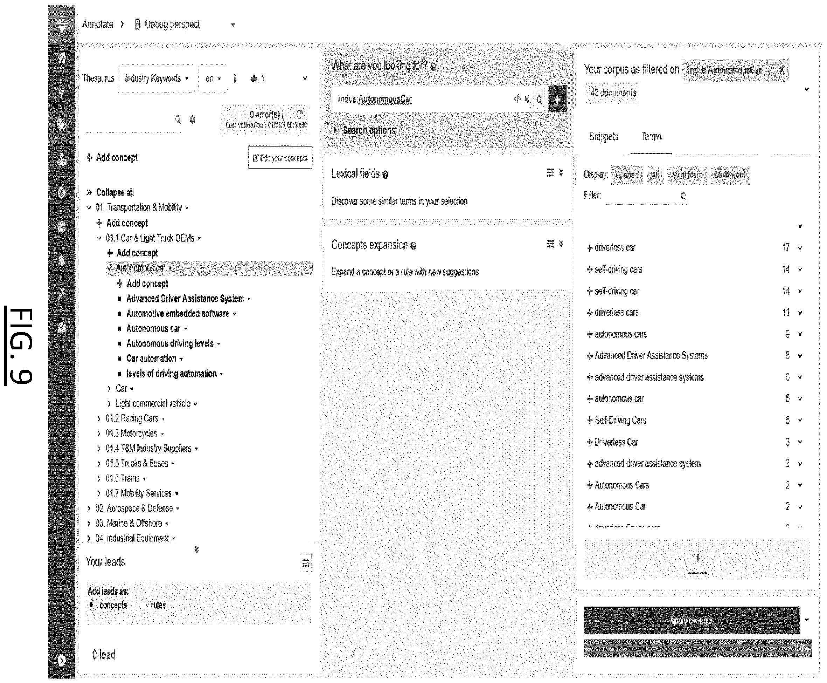

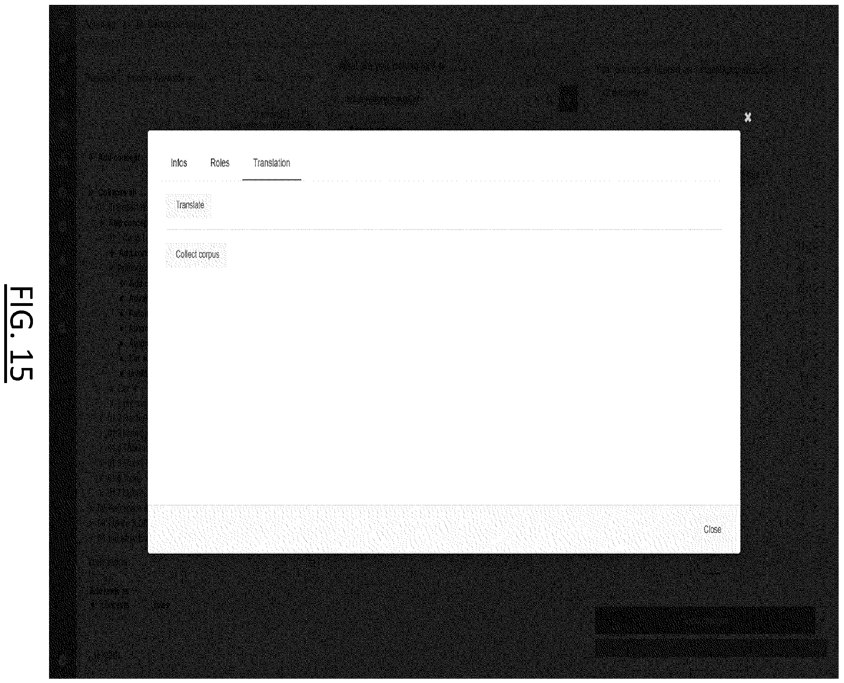

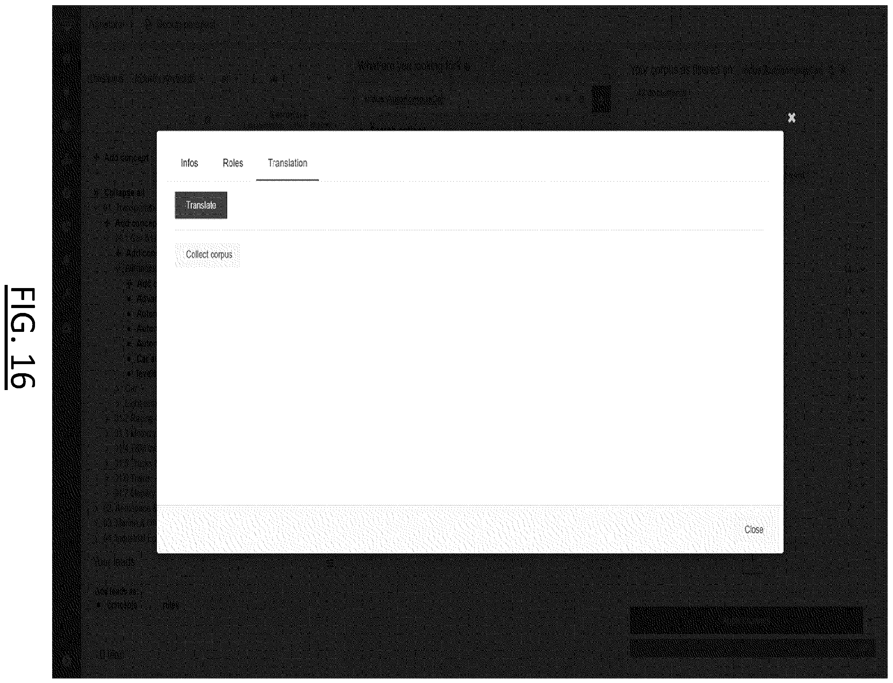

FIG. 2 shows the graphical user interface at the beginning of the method. As can been seen on FIG. 2, there is a list of concept (on the left) of the taxonomy. On FIG. 3, the concept "transportation & mobility" is selected. FIG. 4 shows the subsequent display (still on the left) of a list of concepts which are sub-concepts of "transportation & mobility". The concept "Car & Light Truck OEMs" is selected, as can be seen on FIG. 5. FIG. 6 shows the subsequent display (still on the left) of a list of concepts which are sub-concepts of "Car & Light Truck OEMs". The concept "Autonomous car" is selected, as can be seen on FIG. 7. FIG. 8 shows the extraction rules 80 associated with the autonomous car concept and the search of the corpus based on the extraction rule "indus:AutonomousCar" which is written in the search bar 82. Still on FIG. 8, the results of the search of the corpus are shown (on the right), and the terms found are annotated (illustrated by the bold terms on the figure). FIG 9 shows (on the right) the list of the different annotated terms with their number of occurrences in the results of the search. FIG.s 10 to 14 show the performing of another search, extraction and annotation with the modified extraction rule "indus:AutonomousCar AND autonomous cars". The steps illustrated on FIG.s 2 to 11 may be part of S10 or may be executed between S10 and S20. FIG. 15 shows the translation window to perform step S50. On FIG. 16, the translation button has been selected. FIG.s 17 and 18 illustrate results of the translation of terms in French (column fr), German (column de), Portuguese (column pt), Spanish (column es), Italian (column it); Dutch (column nl), Russian (column ru), Chinese (column zh), and Japanese (column ja).

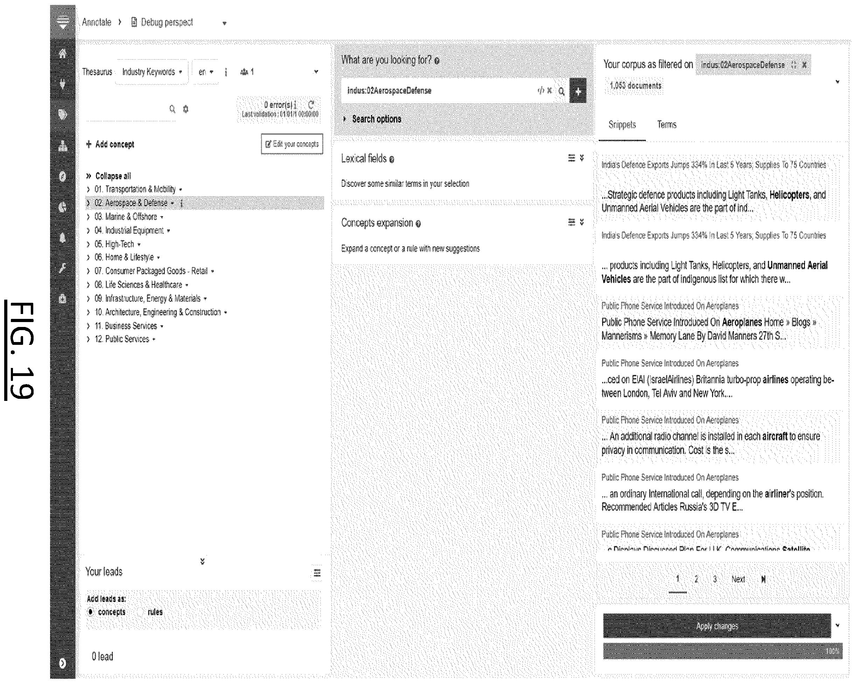

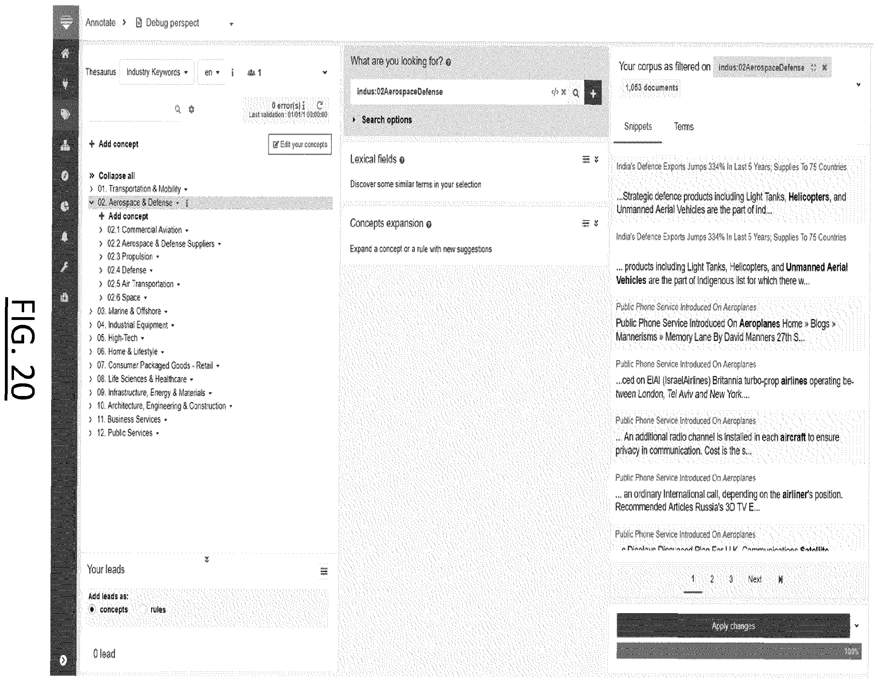

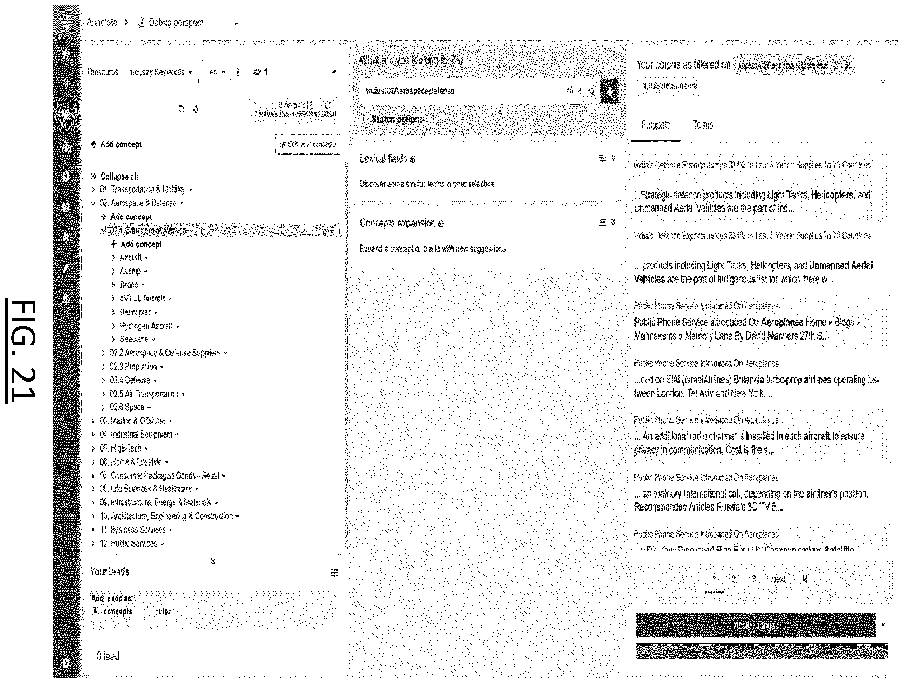

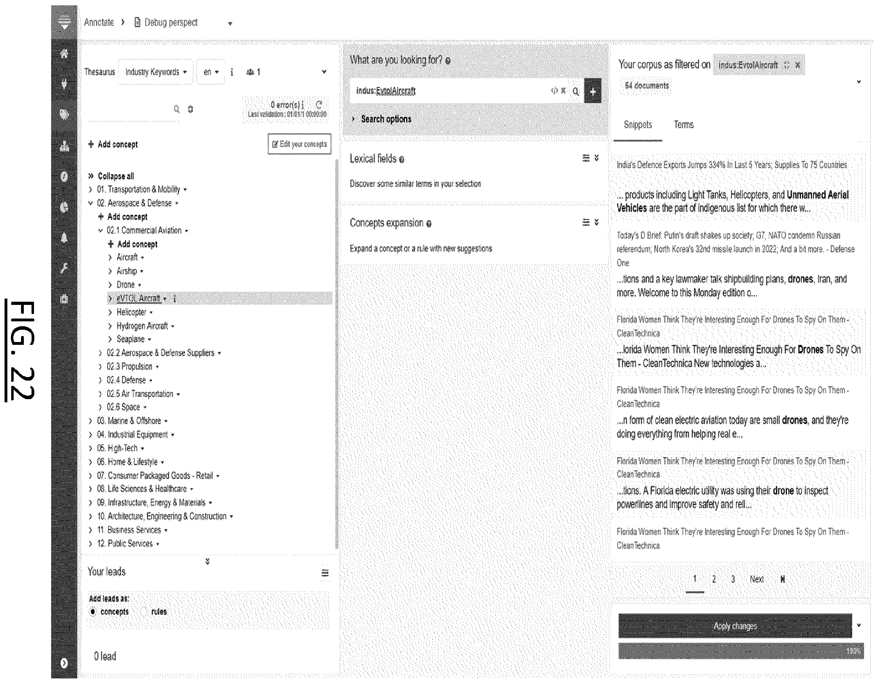

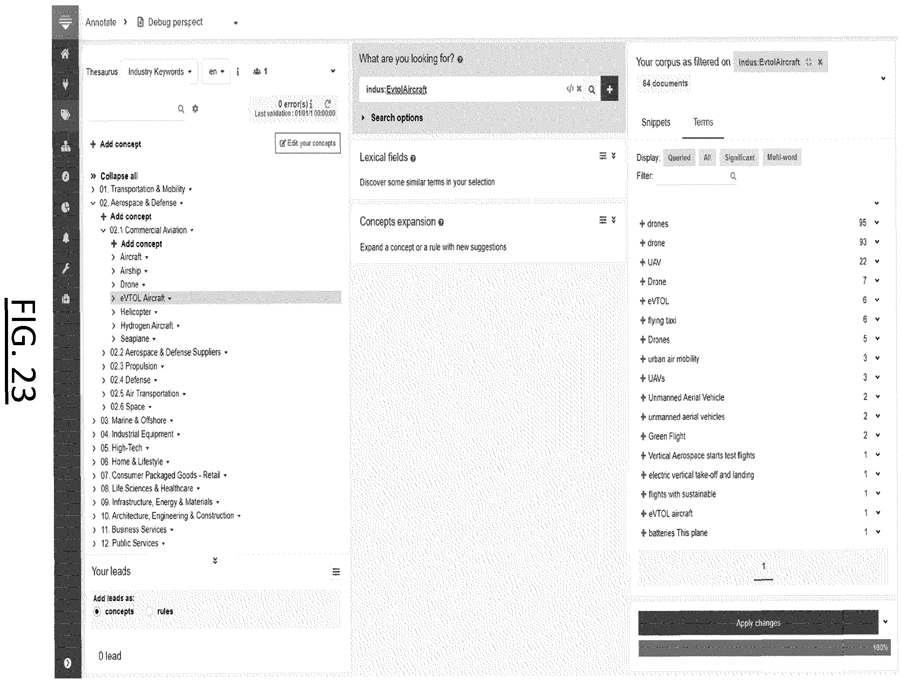

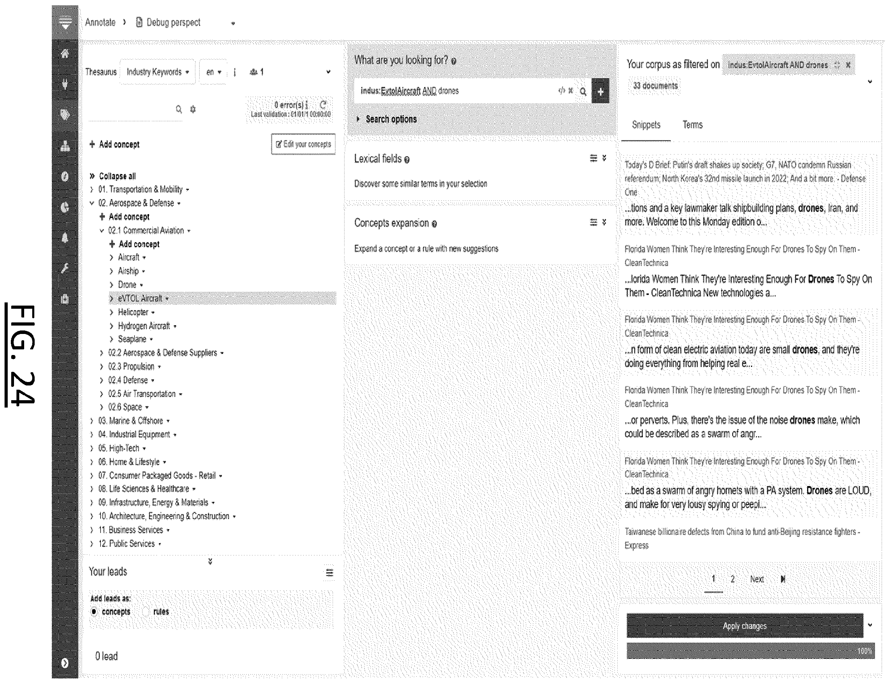

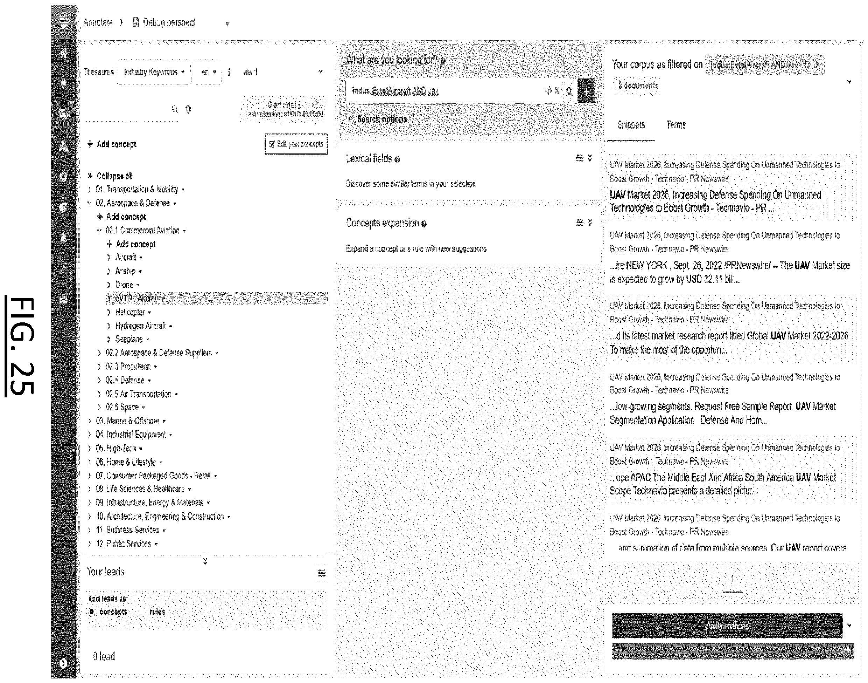

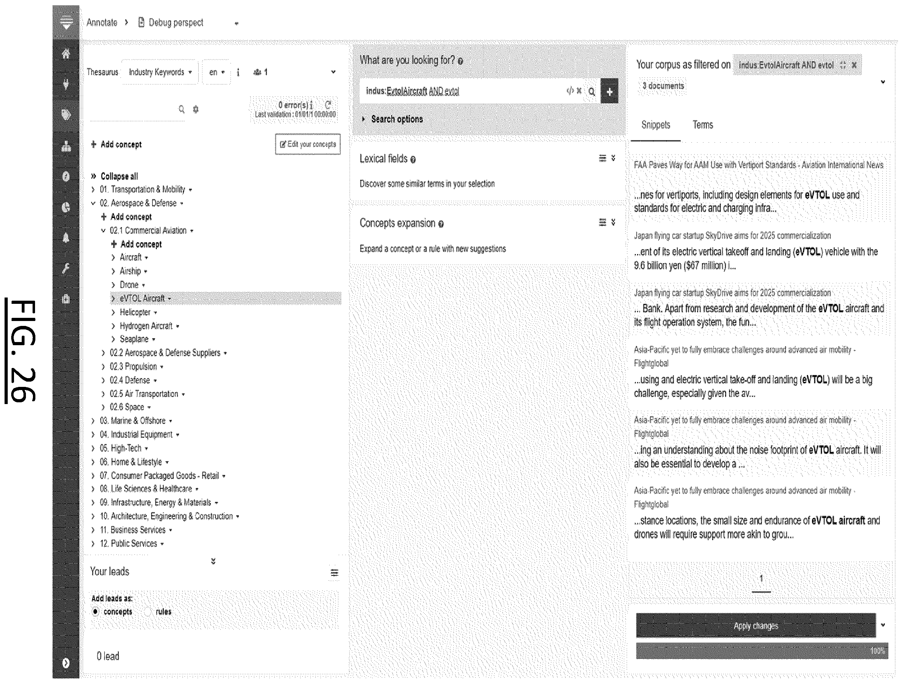

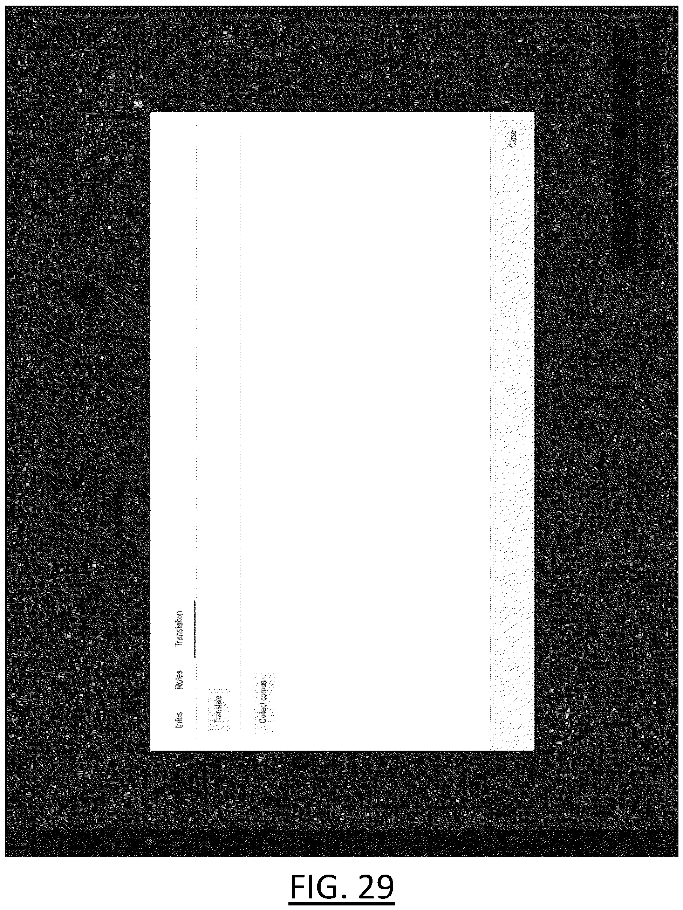

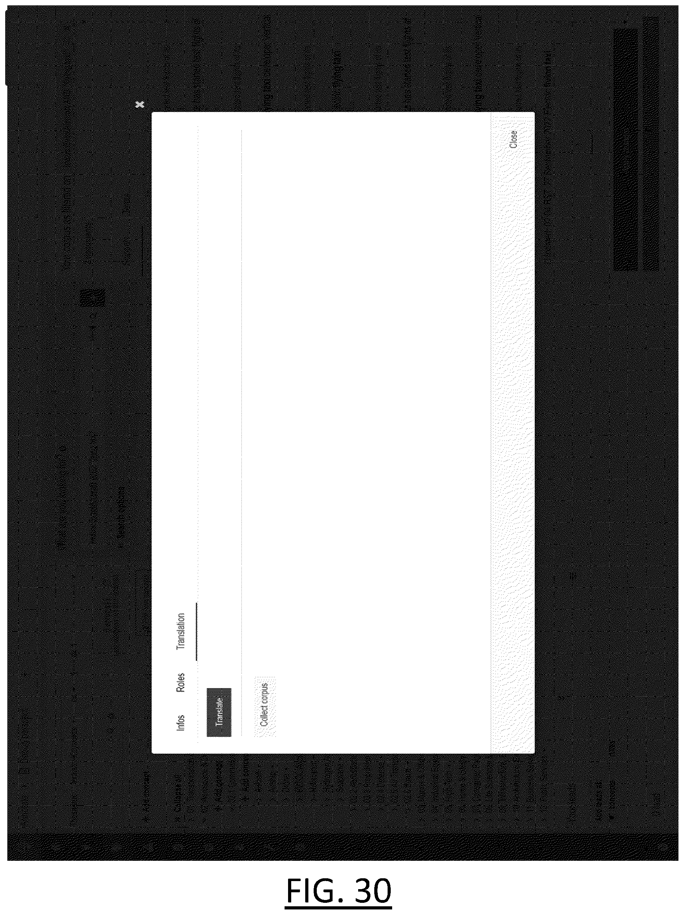

FIG. 19 shows the graphical user interface with now the concept "Aerospace & Defense" being selected. FIG. 20 shows the subsequent display (still on the left) of a list of concepts which are sub-concepts of "Aerospace & Defense". The concept "Commercial Aviation" is selected, as can be seen on FIG. 21. FIG. 22 shows the subsequent display (still on the left) of a list of concepts which are sub-concepts of "Commercial Aviation". The concept "eVTOL Aircraft" is selected, as can be seen on FIG. 22. FIG. 22 also shows the corresponding extraction rule associated with the eVTOL Aircraft concept and the search of the corpus based on this extraction rule "indus:eVTOL Aircraft" which is written in the search bar. Still on FIG. 22, the results of the search of the corpus are shown (on the right), and the terms found are annotated (illustrated by the bold terms on the figure). FIG. 23 shows (on the right) the list of the different annotated terms with their number of occurrences in the results of the search. FIG.s 24 to 28 show the performing other searches, extractions and annotations with the modified extraction rules "indus:eVTOL Aircraft AND drones" (FIG. 24), "indus:eVTOL Aircraft AND uav" (FIG. 25), "indus:eVTOL Aircraft AND evtol" (FIG. 26), "indus:eVTOL Aircraft AND flying taxi" (FIG.s 27-28). The steps illustrated on FIG.s 19 to 28 may be part of S10 or may be executed between S10 and S20. FIG. 29 shows the translation window to then perform step S50. On FIG. 30, the translation button has been selected. FIG.s 31 and 32 illustrate results of the translation of terms in French (column fr), German (column de), Portuguese (column pt), Spanish (column es), Italian (column it); Dutch (column nl), Russian (column ru), Chinese (column zh), and Japanese (column ja).

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

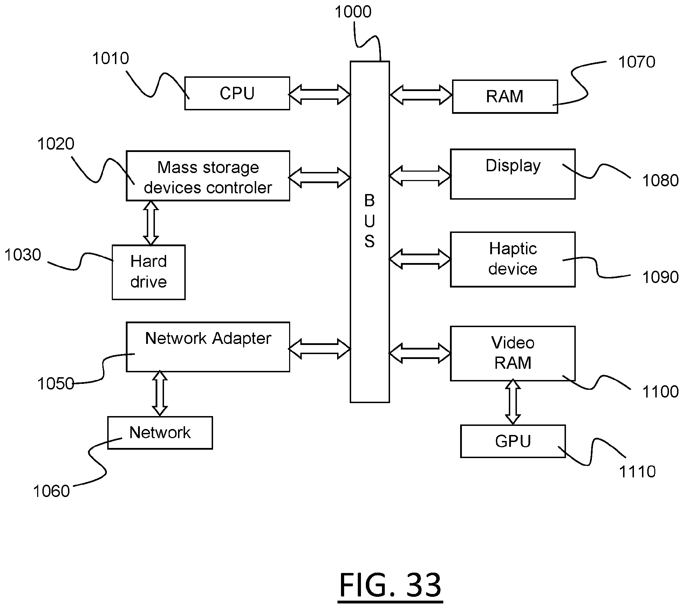

FIG. 33 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform any one or both the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for translating a Natural Language Processing (NLP) system given in a source language into at least one target language, the NLP system being based on a lexicalized taxonomy and allowing text annotation and classification, the method comprising:
- providing (S10) a corpus in the source language, the taxonomy including annotations allowing determination of the most frequent terms describing a given concept in the corpus;
- filtering (S20) the most frequent terms for each annotation;
- querying (S30) the corpus with the most frequent terms and extracting portions of sentences comprising these terms;
- tagging (S40) the terms in each extracted portion;
- translating (S50) the extracted portions in the at least one target language using a quality machine-translator, thereby obtaining a tagged translation for each portion; and
- normalizing (S60) the translations.

2. The method of claim 1, wherein the method further comprises applying (S70) heuristics using statistics to ensure that the normalized tagged translations are correct.

3. The method of claim 1 or 2, wherein the method further comprises using the translated terms to crawl a new corpus of the web in the at least one target language.

4. The method of claim 3, wherein the method further comprises using the results of the web search to ensure that the translation of the terms is correct.

5. The method of any one of claims 1 to 4, wherein each portion comprises a predetermined number of words before the term and a predetermined number of words after the terms.

6. The method of claim 5, wherein the predetermined number of words before the term and/or the predetermined number of terms after the term is larger than or equal to 3, for example larger than or equal to 4 or 5.

7. The method of any one of claims 1 to 6, wherein the quality machine-translator is a machine-translator based on a Deep Neural Network and able to, when a term is tagged in a sentence of the source language to be translated, tag the translated term in the translated sentence in the at least one target language.

8. The method of any one of claims 1 to 7, wherein the most frequent terms are the terms of which cumulated frequencies are greater than 90% and are below 10 terms.

9. The method of any one of claims 1 to 8, wherein the at least one target language comprise at least one target language having a morphology.

10. The method of claim 9, wherein normalizing (S60) the translations in the at least one target language having a morphology comprises transforming all inflected forms of terms to their stems.

11. A computer-implemented method of use of the method of any one of claims 1 to 10, the method of use comprising:
- providing a cross-language semantic search engine; and
- translating at least one lexicalized taxonomy of the search engine given in a source language into at least one target language by applying the method of any one of claims 1 to 10.

12. The method of claim 11, further comprising updating the lexicalized taxonomy given in the source language.

13. A computer program comprising instructions which, when the program is executed by a computer, cause the computer to perform the method of any one of claims 1 to 10 and/or 11 to 12.

14. A computer-readable data storage medium having recorded thereon the computer program of claim 13.

15. A computer system comprising a processor coupled to a memory, the memory having recorded thereon the computer program of claim 13.
